(19) Europäisches Patentamt
European Patent Office
Office européen des brevets

(11) **EP 4 156 208 A1**

(12) **EUROPEAN PATENT APPLICATION**

(43) Date of publication:
**29.03.2023   Bulletin 2023/13**

(21) Application number: **21198927.2**

(22) Date of filing: **24.09.2021**

(51) International Patent Classification (IPC):
**H01B 3/44** (2006.01)    **C08F 14/22** (2006.01)
**C08L 27/16** (2006.01)    **H01B 3/30** (2006.01)

(52) Cooperative Patent Classification (CPC):
(C-Sets available)
**H01B 3/445; C08F 214/182; C08F 214/22;**
**C09D 127/12; C09D 127/16; H01B 13/16;**
H01B 3/30    (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
• **KIM, Taeyun**
  **Seoul (KR)**
• **JEON, Jeong-Woo**
  **Seoul (KR)**

(74) Representative: **Arkema Patent**
**Arkema France**
**DRD-DPI**
**420, rue d'Estienne d'Orves**
**92705 Colombes Cedex (FR)**

(54) **ELECTROACTIVE FIBRE**

(57)    The present invention concerns a process (1) for manufacturing a fluoropolymer coated wire comprising:
- a step of providing a metal wire and at least one solution of a fluoropolymer in a solvent (2), wherein the fluoropolymer has a proportion of less than 10% and 1% or more, by weight of the fluoropolymer relative to the total weight of the solution;
- a step of dip-coating (3) said metal wire in a first solution of the fluoropolymer to deposit a first layer of the solution of fluoropolymer at the surface of the metal wire; and,
- a step of drying (4) to evaporate the solvent from the deposited first layer and to form a first layer of fluoropolymer at the surface of the metal wire.

**Figure 1**

(52) Cooperative Patent Classification (CPC): (Cont.)

C-Sets
**C08F 214/182, C08F 214/22;**
**C08F 214/22, C08F 214/182;**
**C08F 214/22, C08F 214/182, C08F 214/24**

**Description**

FIELD OF THE INVENTION

The present invention relates to the field of electroactive textiles. More particularly, the invention relates to a process for manufacturing an electroactive fibre comprising at least one fluoropolymer shell that adheres to a metal core.

TECHNICAL BACKGROUND

As the demand for Internet of Things (IoT) and System on a Chip (SoC) technology is rapidly increasing, the demand for wearable sensors and devices is simultaneously growing up. Among various feasible solutions, the development of electroactive fibers is expected to be a key solution that can meet smart textile technological demand.

Ferroelectric and relaxor ferroelectric materials which generate a mechanical action induced by an external electric field have drawn much attention and have been acknowledged for applications in various transducers, actuators and sensors.

Among the piezoelectric materials, ceramics are the materials most commonly used on account of their good actuating properties and of their very broad bandwidth. They have, however, a fragility which prevents them from being applied onto curved or complex surfaces.

Other electrically conductive devices use polymer films sandwiched between two electrodes. Among the polymers that may be used, fluoropolymers based notably on vinylidene fluoride (VDF) represent a class of compounds with remarkable properties for a large number of applications. Polyvinylidene fluoride (PVDF) and copolymers comprising VDF and trifluoroethylene (TrFE) are particularly interesting owing to their piezoelectric properties.

As mentioned in the publication by Liu, W., Chen, R., Ruan, X. and Fu, X. "Polymeric piezoelectric fiber with metal core produced by electrowetting-aided dry spinning method." J. Appl. Polym. Sci. 133, n/a-n/a (2016)**,** it is known the use of a metal core (for example made of stainless steel), coated with a piezoactive polymer provided by extrusion, this technique being known as tensile melt coating. The technique proved to be difficult to implement and presents disadvantages. It requires a polymer with a low melt viscosity and leads to substantial coating thicknesses: although the publication indicates that a thickness of more than 20 $\mu$m may be obtained, the thickness generally obtained by this technique is much higher, equal to around 100 $\mu$m or more. A first disadvantage of the technique is that an excessive polymer thickness necessitates the application of high bias voltages, which may be problematic since it causes air breakdown or require sophisticated apparatus. In addition, an excessive polymer thickness usually induces a nonlinear response of the piezoelectric polymer. A second disadvantage of the technique is that it is complicated to center the metal core in the polymer coat, the issue being all the more difficult to control, the smaller is the desired thickness.

The use of a solvent-based coating process makes it possible to overcome the melt viscosity issue and to obtain easily fluoropolymer coats of lower thickness, of less than 100 $\mu$m, typically between 1 and 40 $\mu$m. The main challenge of the solvent-based coating technique lies in the production of an adhesive and homogeneous layer of fluoropolymer at the surface of the metal wire.

The hereinabove already mentioned publication by Liu, W. describes the electrowetting-aided solvent-based coating of PVDF or of P(VDF-TrFE) copolymer on a metal core. A 100 $\mu$m in diameter copper wire enamelled with polyester-imide (6 $\mu$m thick) is used as central core. A PVDF in powder form (Mw = 5 340 000 g/mol) and a P(VDF-TrFE) (VDF/TrFE mass ratio: 70/30) copolymer are dissolved in a 1/1 dimethylformamide/acetone mixture in a concentration of 10 wt%, 15 wt% and 20 wt%. The enamelled wire passes through a solution of polymer, then through a 1 mm in diameter copper needle, and finally through a series of concentric electrodes of 3.5 mm to 0.5 mm. The coating nozzle is biased at 1 kV. The copper core stripped of its enamelling is earthed and the electrodes are connected to a continuous high voltage of 4 kV. The applied field is less than 20 MV/m. Crystallization of the polymer takes place by solvent evaporation. The fiber obtained is metallized with gold by cathode sputtering. The authors show that the use of the electrowetting process makes it possible to obtain electroactive polymer layers on enamelled copper that are more homogeneous, smoother and more adhesive than without high voltage. Coat thicknesses of between 3 and 8 $\mu$m are obtained with the majority of the solutions used. The thickness homogeneity is improved by using high voltage.

A highly homogeneous thickness of the electroactive coat is desirable since it enables to obtain more reliable electroactive fibres, which are particularly less prone to short circuits. However, the electrowetting-aided solvent-based coating method remains rather complicated to use as it involves high electrical voltages during the manufacture and requires the use of an enamelled copper wire.

Patent document WO 2020/128230 describes a solvent-based coating of a P(VDF-TrFE) copolymer which does not use the electrowetting-aided technique. A formulation comprising a P(VDF-TrFE) copolymer solution at 10% to 30% by weight of fluoropolymer in the solution, a surfactant, and an adhesion promoter, is used to coat a bare metal wire (non enamelled metal wire). Although this technique has proved to be working and is much easier to carry-out than the electrowetting-aided technique, it however requires the use of additives which eventually remain in the coat.

Therefore, there is a need to further develop a simpler and reliable solvent-based coating method which enables to obtain an homogeneous coat of a fluoropolymer at the surface of a metal wire.

GOALS

One goal of the invention is to overcome, at least partly, the disadvantages of the prior art.

One goal of the invention is notably to propose a solvent-based coating method which enables to obtain a thin homogeneous coat of a fluoropolymer at the surface of a metal wire.

One goal of the invention is to propose, according to at least some embodiments, a solvent-based coating method which is simple and/or inexpensive and/or highly productive and/or highly reliable.

One goal of the invention is also to propose, according to at least some embodiments, an electroactive fibre and textiles made thereof of high quality. The fibers may have a smooth external surface and present good metal-fluoropolymer coat adhesion to avoid short-circuits and to obtain reliable sensors thereof. This may be of significant use in smart textiles

SUMMARY OF THE INVENTION

The present invention concerns a process for manufacturing a fluoropolymer coated wire comprising:

- a step of providing a metal wire and at least one solution of a fluoropolymer in a solvent, wherein the fluoropolymer has a proportion of less than 10% and 1% or more by weight of the fluoropolymer relative to the total weight of the solution;
- a step of dip-coating said metal wire in a first solution of the fluoropolymer to deposit a first layer of the solution of fluoropolymer at the surface of the metal wire; and,
- a step of drying to evaporate the solvent from the deposited first layer and to form a first layer of fluoropolymer at the surface of the metal wire.

The inventors have noticed that working at low concentration of fluoropolymer in solution enabled to get a highly homogeneous fluoropolymer layer without needing to carry out any electro-wetting technique and/or without needing to use any wetting agent and/or adhesion promoter.

The process may further comprise one or more optional subsequent steps of respectively dip-coating and of drying, to add additional layer(s) of the fluoropolymer, the solvent, and the proportion of fluoropolymer in the solution(s) used for subsequent step(s) of dip-coating being independently chosen.

According to preferential embodiments, the fluoropolymer may have preferably a proportion of 9% or less and 3% or more, and more preferably of 8% or less and 5% or more by weight of the fluoropolymer relative to the total weight of the solution.

In certain embodiments, the fluoropolymer may be a copolymer comprising at least 80 mol% of units derived from vinylidene fluoride (VDF) and from trifluoroethylene (TrFE),
wherein the proportion of units derived from TrFE ranges from 5 mol% to 95 mol%, and preferably from 15 mol% to 55 mol%, relative to the sum of the units derived from VDF and from TrFE.

In certain embodiments, the fluoropolymer may be a terpolymer of P(VDF-TrFE-X) consisting of:

- from 50 to 80 mol% of units obtained from VDF;
- from 15 to 40 mol% of units obtained from TrFE, and
- from 1 to 15 mol% of units obtained from a third monomer X.

The third monomer may preferably be chosen in the list consisting of: tetrafluoroethylene, hexafluoroethylene, trifluoropropenes, tetrafluoropropenes bromotrifluoroethylene, chlorofluoroethylene, chlorotrifluoroethylene and chlorotrifluoropropene. The third monomer may more preferably be chlorotrifluoroethylene or chlorotrifluoropropene.

In certain other embodiments, the fluoropolymer may be a copolymer essentially consisting of, or consisting of, units derived from VDF and TrFE, wherein the proportion of units derived from TrFE ranges from 15 mol% to 55 mol%, preferably from 16 mol% to 45 mol%, more preferably from 17 mol% to 35 mol% and most preferably from 18 mol% to 28 mol%, relative to the sum of the units obtained from VDF and from TrFE.

In certain embodiments, the solvent may be chosen from the following list:

- ketones, notably methyl isobutyl ketone, methyl ethyl ketone, cyclopentanone and acetone,
- esters, notably ethyl acetate, methyl acetate, propyl acetate, butyl acetate and propylene glycol methyl ether acetate,
- amides, such as dimethylformamide and dimethylacetamide,
- dimethyl sulfoxide,
- furans, notably tetrahydrofuran,
- carbonates, notably dimethyl carbonate,
- phosphates, notably triethyl phosphate,
- and mixtures thereof.

The solvent may notably be chosen from the following list: methyl ethyl ketone, cyclopentanone, dimethylsulfoxyde, and mixtures thereof.

In certain preferred embodiments, the solution may not contain any surfactant and/or may not contain any adhesion promoter.

In certain embodiments, the solution may consist of the fluoropolymer and the solvent.

In certain embodiments, the process may comprise 1 to 100 subsequent steps, preferably 3 to 50 subsequent steps, and more preferably 5 to 20 subsequent steps of dip-coating and drying.

In certain preferred embodiments, the average thickness of the fluoropolymer coat at the surface of the metal wire is from 0,1 to 100 micrometers, preferably from 0,5 to 50 micrometers, and more preferably from 1 to 40 micrometers.

The invention also concerns the wire obtained by the process of the invention and a piezoelectric textile comprising at least one wire obtained by said process.

FIGURES

Figure 1 shows a block diagram of a process according to the invention.

Figure 2 shows a schematic view of a spinning device suited for carrying out the process of the invention.

Figures 3 and 4 are microscopic photographs of the coated cable made in example 1. Figure 3 shows the external aspect whereas Figure 4 is a cross section view.

Figure 5 is a microscopic view of the external aspect of the coated cable made in comparative example 1.

Figure 6 represents different configurations in textiles of electroactive transductors.

Figure 7 represents a weaved textile made with the coated fibers of example 1 with two sensing areas.

Figure 8 represents the oscillograms following a drop sensing test. "Reverse circuit" means that reverse connection to the scilloscope was made compared to "Forward circuit".

DESCRIPTION OF EMBODIMENTS OF THE INVENTION

Fluoropolymer

The fluoropolymer is a polymer with a carbon chain which includes structural units (or units, or repeating units, or moieties) including at least one fluorine atom. Preferably, the fluoropolymer may comprise units obtained from (i.e. they are obtained by polymerization of) vinylidene fluoride (VDF) monomers.
The fluoropolymer may be a PVDF homopolymer. Preferably, however, the fluoropolymer may be a copolymer (in the broad sense), meaning that it comprises units obtained from at least one monomer X other than VDF. A single monomer X may be used, or a plurality of different monomers X, depending on the case.
In certain embodiments, the monomer X may be of formula $CX_1X_2=CX_3X_4$, in which each group $X_1$, $X_2$, $X_3$ and

$X_4$ is independently chosen from H, Cl, F, Br, I and C1-C3 (preferably C1-C2) alkyl groups which are optionally partially or completely halogenated - this monomer X being different from VDF (i.e., if $X_1$ and $X_2$ represent H, at least one from among $X_3$ and $X_4$ does not represent F, and if $X_1$ and $X_2$ represent F, at least one from among $X_3$ and $X_4$ does not represent H).
In certain embodiments, each group $X_1$, $X_2$, $X_3$ and $X_4$ may independently represent an H, F, Cl, I or Br atom or a methyl group optionally including one or more substituents chosen from F, Cl, I and Br. Particularly, in certain embodiments, each group $X_1$, $X_2$, $X_3$ and $X_4$ may independently represent an H, F, Cl, I or Br atom.
In certain embodiments, only one from among $X_1$, $X_2$, $X_3$ and $X_4$ may represent a Cl or I or Br atom, and the others of the groups $X_1$, $X_2$, $X_3$ and $X_4$ may independently represent: an H or F atom or a C1-C3 alkyl group optionally including one or more fluorine substituents; preferably, an H or F atom or a C1-C2 alkyl group optionally including one or more fluorine substituents; and more preferably an H or F atom or a methyl group optionally including one or more fluorine substituents. Examples of monomers X are as follows: vinyl fluoride (VF), trifluoroethylene (TrFE), tetrafluoroethylene (TFE), hexafluoropropene (HFP), trifluoropropenes and notably 3,3,3-trifluoropropene, tetrafluoropropenes and notably 2,3,3,3-tetrafluoropropene or 1,3,3,3-tetrafluoropropene (in the cis or, preferably, trans form), hexafluoroisobutylene, perfluorobutylethylene, pentafluoropropenes and notably 1,1,3,3,3-pentafluoropropene or 1,2,3,3,3-pentafluoropropene, perfluoroalkyl vinyl ethers and notably those of general formula Rf-O-CF=CF2, Rf being an alkyl group, preferably a C1 to C4 alkyl group (preferred examples being perfluoropropyl vinyl ether or PPVE, and perfluoromethyl vinyl ether or PMVE).
In certain embodiments, the monomer X may include a chlorine or bromine atom. It may in particular be chosen from bromotrifluoroethylene, chlorofluoroethylene, chlorotrifluoroethylene and chlorotrifluoropropene. Chlorofluoroethylene may denote either 1-chloro-1-fluoroethylene or 1-chloro-2-fluoroethylene. The 1-chloro-1-fluoroethylene isomer (CFE) is preferred. Chlorotrifluoropropene is preferably 1-chloro-3,3,3-trifluoropropene (in cis or trans, preferably trans, form) or 2-chloro-3,3,3-trifluoropropene.

In certain embodiments, the fluoropolymer may comprise units obtained from VDF and HFP, or else may be a P(VDF-HFP) polymer consisting of units obtained from VDF and HFP. The molar proportion of repeating units obtained from HFP may preferably be from 2% to 50%, notably from 5% to 40%.

In certain preferred embodiments, the fluoropolymer may comprise units obtained from VDF and CFE, or from CTFE, or from TFE, or from TrFE. The molar proportion of repeating units obtained from monomers other than VDF may preferably be less than 50%, more preferably less than 40%.

In certain preferred embodiments, the fluoropolymer may be a copolymer (in a broad sense) comprising at least 80 mol% of units derived from VDF and TrFE. The proportion of units obtained from TrFE may preferably be from 5 to 95 mol%, relative to the sum of the units obtained from VDF and TrFE, and notably: from 5 to 10 mol% or from 10 to 15 mol%; or from 15 to 20 mol%; or from 20 to 25 mol%; or from 25 to 30 mol%; or from 30 to 35 mol%; or from 35 to 40 mol%; or from 40 to 45 mol%; or from 45 to 50 mol%; or from 50 to 55 mol%; or from 55 to 60 mol%; or from 60 to 65 mol%; or from 65 to 70 mol%; or from 70 to 75 mol%; or from 75 to 80 mol%; or from 80 to 85 mol%; or from 85 to 90 mol%; or from 90 to 95 mol%. A range from 15 to 55 mol% is particularly preferred.

In certain preferred embodiments, the fluoropolymer may be a terpolymer consisting of units obtained from VDF, TrFE and from another monomer X as defined above, different from VDF and from TrFE, or else is a P(VDF-TrFE-X) polymer consisting of units obtained from VDF, TrFE and another monomer X. In this case, preferably, the other monomer X may be chosen from TFE, HFP, trifluoropropenes and notably 3,3,3-trifluoropropene, tetrafluoropropenes and notably 2,3,3,3-tetrafluoropropene or 1,3,3,3-tetrafluoropropene (in cis, or, preferably, trans form), bromotrifluoroethylene, chlorofluoroethylene, chlorotrifluoroethylene and chlorotrifluoropropene. The monomers CTFE or CFE are particularly preferred. The proportion of units obtained from this other monomer X in the fluoropolymer (relative to the total amount of the units) may range, for example, from 1 to 2 mol%; or from 2 to 3 mol%; or from 3 to 4 mol%; or from 4 to 5 mol%; or from 5 to 6 mol%; or from 6 to 7 mol%; or from 7 to 8 mol%; or from 8 to 9 mol%; or from 9 to 10 mol%; or from 10 to 12 mol%; or from 12 to 15 mol%; or from 15 to 20 mol%. The range from 1 to 15 mol% is particularly suitable.

In certain preferred embodiments, the fluoropolymer may be a terpolymer of P(VDF-TrFE-X), for example P(VDF-TrFE-CFE) or P(VDF-TrFE-CTFE), and may consist of:

- from 50 to 80% of units obtained from VDF;
- from 15 to 40% of units obtained from TrFE, and
- from 2 to 15% of units obtained from the third monomer.

In some preferred embodiments, the terpolymer of P(VDF-TrFE-X), notably P(VDF-TrFE-CFE), may consist of:

- from 60 to 70% of units obtained from VDF,
- from 25 to 35% of units obtained from TrFE,
- from 2,5 to 10% of units obtained from the third monomer.

In certain other embodiments, the fluoropolymer may essentially consist of units obtained from VDF and TrFE, meaning it contains less than 2 mol% of units obtained from any other monomer, and may preferably consist of VDF and TrFE.

In certain preferred embodiments, the fluoropolymer may be a copolymer consisting of units derived from vinylidene fluoride and of units derived from trifluoroethylene, or else P(VDF-TrFE). The proportion of units derived from TrFE may preferably be from 5 mol% to 95 mol%, relative to the sum of the units derived from VDF and TrFE, and notably: from 5 mol% to 10 mol%; or from 10 to 15 mol%; or from 15 to 20 mol%; or from 20 to 25 mol%; or from 25 to 30 mol%; or from 30 to 35 mol%; or from 35 to 40 mol%; or from 40 to 45 mol%; or from 45 to 50 mol%; or from 50 to 55 mol%; or from 55 to 60 mol%;; 10 or from 60 to 65 mol%; or from 65 to 70 mol%; or from 70 to 75 mol%; or from 75 to 80 mol%; or from 80 to 85 mol%; or from 85 to 90 mol%; or from 90 to 95 mol%. A range from 15 to 55 mol% is particularly preferred.

In certain preferred embodiments, the proportion of units derived from TrFE may range from 15 mol% to 55 mol%, preferably from 16 mol% to 45 mol%, more preferably from 17 mol% to 35 mol% and most preferably from 18 mol% to 28 mol%, relative to the sum of the units obtained from VDF and from TrFE.

In certain embodiments, the Curie temperature of the fluoropolymer essentially consisting of units obtained from VDF and TrFE, or else being P(VDF-TrFE) copolymer, may be between 50°C and 145°C. The Curie temperature may be measured by differential scanning calorimetry or by dielectric spectroscopy.

The fluoropolymers used in the process of the invention may be produced by using any known processes, such as emulsion polymerization, microemulsion polymerization, suspension polymerization and solution polymerization

The molar composition of the units in the fluoropolymers may be determined by various means such as infrared spectroscopy or Raman spectroscopy. Conventional methods of elemental analysis of carbon, fluorine and chlorine or bromine or iodine elements, such as X-ray fluorescence spectroscopy, make it possible to calculate the mass composition of the polymers, from which the molar composition is deduced. Use may also be made of multinuclear NMR techniques, notably proton (1H) and fluorine (19F) NMR techniques, by analysis of a solution of the polymer in a suitable deuterated solvent. Finally, it is possible to combine elemental analysis, for example for the heteroatoms, such as chlorine or bromine or iodine, and NMR analysis. Accordingly, the content of units obtained from CTFE, in a P(VDF-TrFE-CTFE) terpolymer, for example, may be determined by measuring the content of chlorine by elemental analysis.

The fluoropolymers, notably P(VDF-TrFE) copolymers and, P(VDF-TrFE-CFE) and P(VDF-TrFE-CTFE) terpolymers, may preferably be random and linear. They may be homogeneous or heterogeneous. A homogeneous polymer has a uniform chain structure, the random distribution of the units derived from the various monomers barely changing between the chains. In a heterogeneous polymer, the chains have a distribution of units derived from the various monomers of multimodal or spread-out type. A heterogeneous polymer thus comprises chains that are richer in a given unit and chains that are poorer in the given unit.

According to certain embodiments, the weight-average molar mass of the fluoropolymer, and notably P(VDF-TrFE) copolymers, and P(VDF-TrFE-CFE) and P(VDF-TrFE-CTFE) terpolymers, may range from 150 000 g/mol to 2 000 000 g/mol, preferably from 250 000 g/mol to 1 500 000 g/mol and more particularly from 300 000 g/mol to 800 000 g/mol. In the context of this patent application, the weight-average molar mass is also referred to as the "molecular weight" (Mw) of the fluoropolymer. The latter can be adjusted by modifying certain parameters of the manufacturing process of the fluoropolymer, such as the temperature in the reactor, or by adding a transfer agent.

The molecular weight distribution can be estimated by SEC (size exclusion chromatography) with dimethylformamide (DMF) as eluent, with a set of three columns of increasing porosity. The stationary phase is a styrene-DVB gel. The detection process is based on measurement of the refractive index, and calibration is performed with polystyrene standards. The sample is dissolved at 0.5 g/l in DMF and filtered through a 0.45 $\mu$m nylon filter.

Solution of the fluoropolymer in a solvent

The fluoropolymer, for example a P(VDF-TrFE) copolymer or , a P(VDF-TrFE-CFE) or P(VDF-TrFE-CTFE) terpolymer, is dissolved in a solvent at 1 wt% or more up to 10 wt% not included, to form a solution, the percentages being given by weight of fluoropolymer relative to the total weight of the solution. The inventors have noticed that above 10 wt%, an homogeneous layer of fluoropolymer may not be obtained without complementary techniques, including electro-wetting and/or formulating the composition with a wetting agent and/or an adhesion promoter. Surprisingly, in the range of 1 wt% to 10 wt%, an homogeneous layer may be obtained even without using the previous cited techniques. Below 1 wt%, the solution may become too fluid to obtain a desired fluoropolymer layer.

In some embodiments, the fluoropolymer is at a concentration of 9,5%wt or less, or 9%wt or less, or 8,5% or less, or 8%wt or less, in solution.

In some embodiments, the fluoropolymer is at a concentration of more than 1%wt, or 2%wt or more, or 3%wt or more, or 4%wt or more, or 5%wt or more, in solution.

In some embodiments the fluoropolymer may be at a concentration of 1%wt to 2%wt, or 2%wt to 3%wt, or 3%wt to 4%wt, or 4%wt to 5%wt, or 5%wt to 6%wt, or 6%wt to 7%wt, or 7%wt to 8%wt, or 8%wt to 9%wt, or 9% wt to less than 10%wt.

Preferably the fluoropolymer is at a concentration of 3%wt to 9%wt.

More preferably, the fluoropolymer is at a concentration of 5%wt to 8%wt.

According to one embodiment, said solvent may be chosen from the following list:

- ketones, notably methyl isobutyl ketone, methyl ethyl ketone (MEK), cyclopentanone and acetone,
- esters, notably ethyl acetate, methyl acetate, propyl acetate, butyl acetate and propylene glycol methyl ether acetate,
- amides such as dimethylformamide and dimethylacetamide,
- dimethyl sulfoxide,
- furans, notably tetrahydrofuran,
- carbonates, notably dimethyl carbonate,
- phosphates, notably triethyl phosphate,
- and mixtures thereof.

Preferably, said solvent may be chosen from the following group: methyl ethyl ketone, cyclopentanone, dimethylsulfoxyde, and mixtures thereof.

According to certain embodiments, the solution may not contain any surfactant and/or may not contain any adhesion promoter.

A surfactant is a chemical that is added to ensure better wetting of the fluoropolymer solution on the metal wire. The solution may notably not contain any surfactant based on an acrylic copolymer (for example BYK 3440) or based on high molecular weight block acrylic copolymers (for example Disperbyk 163) as mentioned in WO 2020/128230.

An adhesion promoter is a chemical that enhances the fluoropolymer-metal adhesion. The solution may notably not contain any adhesion promoter based on functional copolymers of hydroxyl type with acid groups (for example BYK 4510) or binders of ethoxysilane type, for example 3-aminopropyltriethoxysilane (Dynasylan AMEO).

According to one preferred embodiment, the solution may consist of the fluoropolymer and the solvent.

According to one preferred embodiment, the viscosity of the solution may advantageously be of 0,015 to 1 Pa.s for a shear rate of 10 s$^{-1}$. The viscosity is measured at ambient temperature at 25°C using a Brookfield viscometer according to the standard ASTM D2983-20. This range of viscosities enables to form a thin, substantially homogeneous layer, of the solution of fluoropolymer at the surface of the metal wire. Preferably, the viscosity of the solution may be of 0,02 to 0,5 Pa.s. The viscosity of the dip-coating solution may notably be of 0,020 to 0,025 Pa.s, or of 0,025 to 0,05 Pa.s, or of 0,05 to 0,075 Pa.s, or of 0,075 to 0,1 Pa.s, or of 0,1 to 0,2 Pa.s, or of 0,2 to 0,3 Pa.s, or of 0,3 to 0,4 Pa.s, or of 0,4 Pa.s to 0,5 Pa.s.

Process for manufacturing a fluoropolymer coated wire

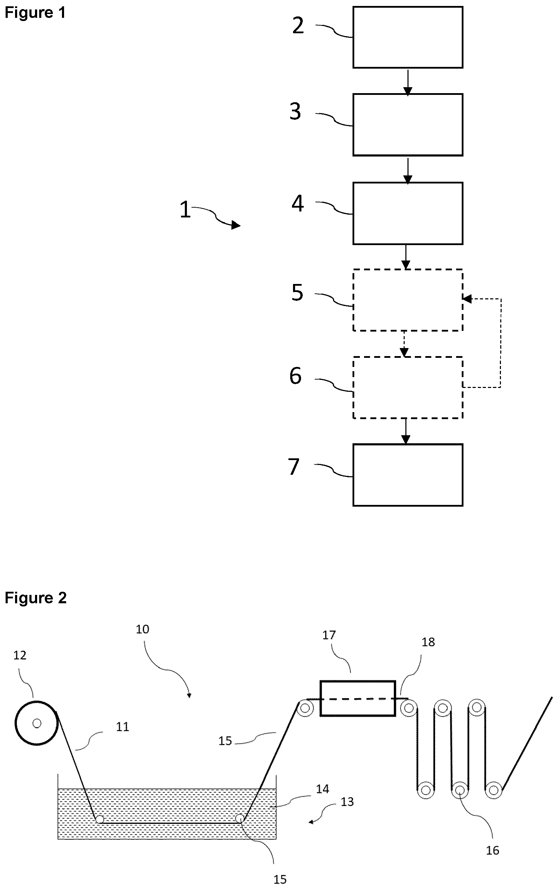

The invention relates to a solvent-based process for the continuous manufacture of a fluoropolymer coated metal wire forming an electroactive fibre. Such electroactive fibre may be of particular interest for smart textiles. Figure 1 is a block diagram of a process 1 describing the different steps of a process according to the invention. Figure 2 represents a schematic view of one particular spinning device 10 in which the process may be carried out.

Referring to Figure 1, the process 1 comprises a step 2 of: providing a metal wire and one or more solutions of a fluoropolymer in a solvent.

The metal may preferably have an electrical conductivity greater than 0.5 MS/m and may be chosen from the following list: copper, platinum, stainless steel, molybdenum. The metal wire may be single stranded or multi stranded, with an outer diameter ranging from 50 to 900 $\mu$m, and preferably from 80 to 300 $\mu$m. The metal may have a Young's modulus of greater than 1 GPa and also an elastic elongation of between 1% and 10%. Advantageously, the metal wire may be degreased in a tank (not represented) using an alkaline, acidic or detergent solution or with alcohol prior to be coated.

One or more solutions of a fluoropolymer in a solvent as hereinabove described is/are provided. Several solutions having a different fluoropolymer and/or a different solvent and/or a different proportion of fluoropolymer in the solvent may be prepared as the fluoropolymer coat may be prepared by deposition of several fluoropolymer layers (see below optional steps 5 and 6).

In some embodiments, the several solutions may notably consist of the same fluoropolymer and the same solvent but have different proportions of fluoropolymer in the solution.

In some embodiments, only one solution may be provided and used for the deposition of the several layers.

The process 1 further comprises a step 3 of: dip-coating the metal wire in a (first) solution of the fluoropolymer to deposit a (first) layer of the solution of fluoropolymer at the surface of the metal wire. In reference to Figure 2, the bare metal wire 11 may be unwinded from a roller 12 and guided, thanks to guiding rollers 15, to a bath 13 containing a (first) solution 14 of fluoropolymer. The wire passes through the bath and exits the bath with a (first) layer of the solution of fluoropolymer deposited at the surface of the metal wire 15.

The temperature of the solution of fluoropolymer in the bath may be inferior to the solvent boiling temperature. Preferably, the temperature of the solution of fluoropolymer is less than 80°C, or less than 70°C, or less than 60°C, or less than 50°C, or less than 40°C. In some preferred embodiments, the solution of fluoropolymer is at ambient temperature in the bath, namely typically between 10°C and 30°C.

The process 1 further comprises a step 4 of drying to evaporate the solvent from the deposited (first) layer. A drying method may consist in passing the coated wire through a tunnel of hot air 17, blown at a temperature below the melt temperature of the fluoropolymer, making it possible to evaporate off the solvent of the deposited layer of fluoropolymer solution. The drying temperature, notably for P(VDF-TrFE) copolymers, P(VDF-TrFE-CFE) and P(VDF-TrFE-CTFE) terpolymers, may be for example between 50°C and 150°C. Alternative or complementary drying method known by the skilled person, such as using infrared radiations, may also be used. The wire exits the tunnel of hot air with a (first) dry layer of fluoropolymer coated at the surface of the metal wire 18.

The average thickness of the (first) deposited layer of fluoropolymer is generally from 0,1 to 10 $\mu$m, preferably from 0,5 to 7 $\mu$m and most preferably from 1 to 5 $\mu$m. The average thickness may be assessed through direct measurement of a cross-section of the coated wire thanks to Scanning Electron Microscopy. The image may be binarized and analysed in order to determine the minimum thickness, maximum and average thickness of a cross-section.

The layer thickness of the deposited layer is highly homogeneous. The homogeneity may be assessed thanks to the R ratio defined as:

$$R = (r_{max} - r_{min})/r_{max,}$$

wherein $r_{max}$ is the highest thickness as measured on a cross-section and $r_{min}$ is the lowest thickness as measured on a cross section.

The R ratio may preferably be of less than 0.30, more preferably of less than 0.25, even more preferably of less than 0.20 and most preferably of less than 0.15.

The calculated R ratio may be obtained by one measurement of one single cross section. Preferably the R ratio is obtained by using the highest value of $r_{max}$ and lowest value of $r_{min}$ measured on several cross-sections, for example at least 5 cross-sections or at least 10 cross-sections separated by a distance of, for example 1 cm, or 10 cm, or 1 meter. In some embodiment, the R ratio may be obtained by using the highest value of $r_{max}$ and lowest value of $r_{min}$ of 5 cross-sections separated by a distance of around 1 cm.

Optionally, the process 1 may further comprise n subsequent steps 5 of dip-coating and 6 of drying, wherein n additional layers are added in the same manner as the first layer of fluoropolymer. These n subsequent steps make it possible to adjust the thickness of the final fluoropolymer coat.

The number n may be from 1 to 100, preferably from 3 to 50, and more preferably from 5 to 20 As a result, the average thickness of the fluoropolymer coat at the surface of the metal wire may be from 0,1 to 100 micrometers, preferably from 0,5 to 50 micrometers, and more preferably from 1 to 40 micrometers. The average thickness of the fluoropolymer coat may notably be from 1 to 10 micrometers, or from 10 to 20 micrometers, or from 20 to 30 micrometers, or from 30 to 40 micrometers.

In some embodiments, the solution used for depositing the first layer(s) is more diluted than the solution used for depositing the last layers(s).

The process 1 may finally comprises a step 7 of winding the coated wire. The coated wire may be carried along several Godet rollers 16 (heatable rollers) to finish the drying step and put the wire under tension.

Electroactive transducer

In the piezoelectric composite fiber comprising the metal wire covered by the fluoropolymer coat, the metal wire acts as the inner electrode.

Some uses of this composite piezoelectric fiber require the deposition of an outer electrode on the fluoropolymer coat.

In some embodiments, the fluoropolymer coated wire may be further covered continuously with a counterelectrode, according to one of the routes indicated below:

- solvent-based coating with a solution of conductive polymer, for example a solution of PEDOT:PSS (PEDOT denotes poly(3,4-ethylenedioxythiophene) and PSS denotes poly(styrene sulfonate)), in a bath (immersion) or in a coating nozzle; or
- liquid-based coating using a conductive ink of silver lacquer or carbon varnish type (carbon or nanocarbon blacks), by immersion or in a coating nozzle; or
- melt-route coating with a CPC polymer; in this case, no drawing and no alignment of fillers, the conductivity is greater than 100 S/m; or
- metallization by evaporation of gold or of another conductive metal; or
- binding of a conductive metal wire around the piezoactive coat; or
- braiding of a metal wire around the piezoactive coat (cord, cable, etc.).

However, in some other embodiments, the fluoropolymer coated wire may not need to be covered with a counterelectrode. Indeed, as illustrated below in a piezoelectric textile, the role of counter electrode may be played other pure conductive fibers or fluoropolymer coated fibers.

Textile

Fluoropolymer coated fibers may be weaved together and/or together with other pure conductive fibers (not having a fluoropolymer coat), such as bare metal wires, so that to obtain a textile presenting an interlocking network of piezoelectric sensors and/or actuators. Textiles obtained by weaving methods may be composed of warp threads and weft threads.

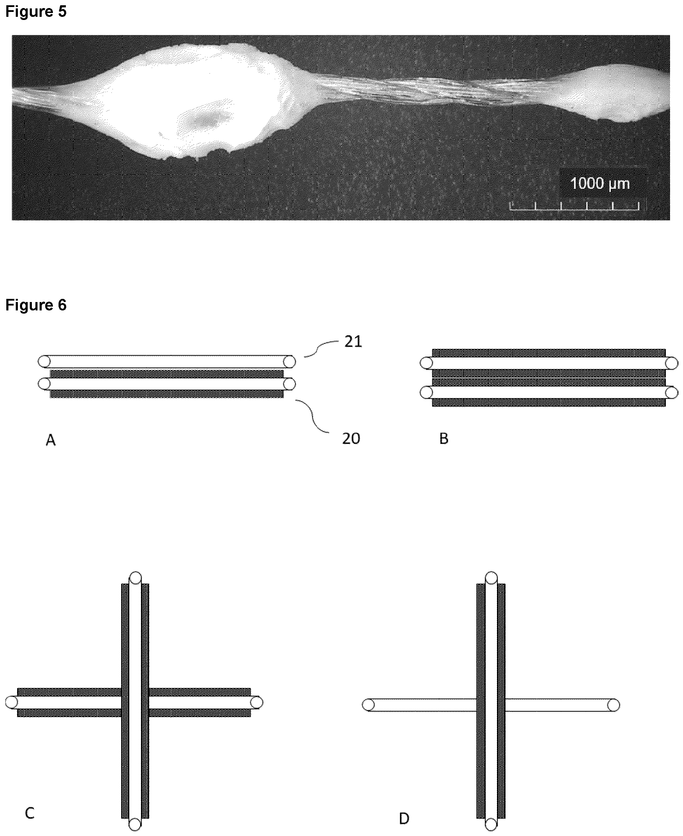

Each transducer, sensor and/or actuator, is composed of one or more piezoelectric coat in-between two electrodes. Several possible configurations are presented on Figure 6:

    A) one fluoropolymer coated fiber 20 weaved so that it is sensibly parallel to an other conductive fiber 21 (not having a fluoropolymer coat);

    B) two fluoropolymer coated fibers weaved sensibly parallel to each other;

    C) two fluoropolymer coated fibers weaved sensibly perpendicular to each other;

    D) one fluoropolymer coated fiber weaved so that it is sensibly perpendicular to an other conductive fiber (not having a fluoropolymer coat).

Annealing step

Once the metal wire has been coated with the fluoropolymer coat, for example when the fluoropolymer coated fibers have been weaved into a textile, a step of thermal annealing known by the person skilled in the art may make it possible to allow and/or increase the crystallization of the fluoropolymer, in order to improve the piezoelectric properties.

The thermal annealing step preferably lasts 12 hours or less, more preferably 6 hours or less, even more preferably 1 hour or less, even more preferably 30 minutes or less and most preferably 15 minutes or less.

Biasing step

This operation consists in applying an electric field between the surface of the adhered polymer layer and the central metal core. In embodiments wherein the coated fiber does not contain any counter-electrode, two methods known by the person skilled in the art may be employed: direct-contact biasing and contactless biasing. In embodiments wherein a counterelectrode has been deposited on the coated fiber, the biasing may be carried out in-line.

EXAMPLES

The examples that follow illustrate the invention without limiting it.

**Example 1**

A solution containing 8 wt% P(VDF-TrFE) (80/20 mol%) copolymer, having a molecular weight Mw of 630.000 g/mol, was prepared by dissolution in polypropylene glycol monomethyl ether acetate under stirring at 60°C.

The viscosity of the solution at 25°C was 0,24 Pa.S for a shear rate of 10 s$^{-1}$ using a Brookfield viscometer according to the standard ASTM D2983-20. The P(VDF-TrFE) solution did not contain any further additive.

A coated fiber was produced according to the process of the invention using ten consecutive steps of dip-coating in the above prepared solution and drying, of a multi-stranded copper wire having a diameter of around 181 $\mu$m.

The winding speed of the winding roller was 5 m/min. The drying step was carried out by blowing hot air at a temperature of 145 °C.

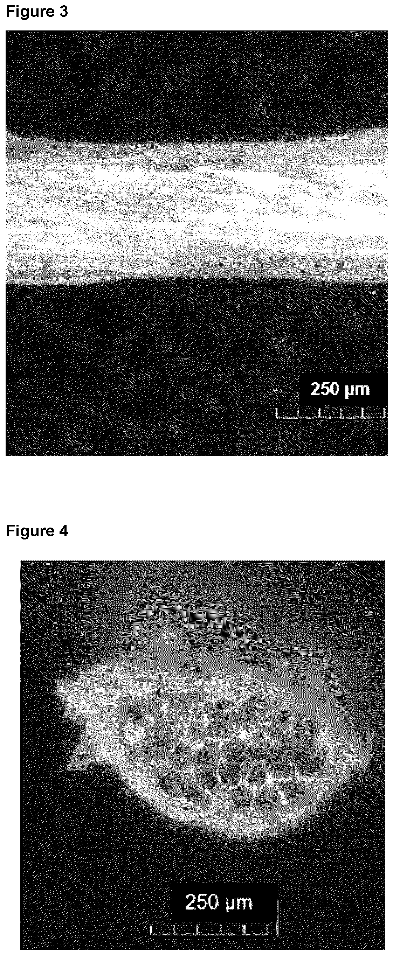

The obtained P(VDF-TrFE) had an average thickness of 30 $\mu$m as measured by microscopy on a cross section (maximum thickness of: 34 $\mu$m; minimum thickness of: 26 $\mu$m) (see Figures 3 and 4).

**Comparative example 1**

A solution containing 15 wt% P(VDF-TrFE) (70/30 mol%) copolymer, having a molecular weight Mw of 600.000 g/mol was prepared by dissolution in N, N dimethyl formamide.

One layer of fluoropolymer was coated at the surface of the same multi-stranded copper wire used in example 1 using the same process as described for example 1. The obtained fiber presents a very uneven layer of fuoropolymer (see Figure 5).

**Manufacture of smart textiles**

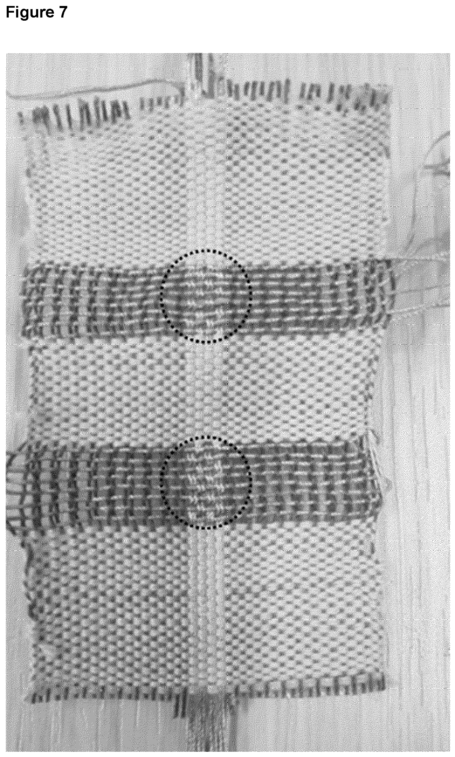

Two textiles were weaved: one including fibers made according to example 1 (see photo on Figure 7; see also Figure 6-C) and one including fibers made according to comparative example 1. The textile were made of four fluoropolymer coated fibers used as warp threads and sixteen (8 x 2) fluoropolymer coated fibers used as weft threads, in order to obtain two sensing areas.

The textile was thereafter annealed by heating it at a temperature of 140°C for 10 minutes. In the end, the annealed textile was biased at room temperature (23°C) by contact poling at a voltage of 100 V/$\mu$m (calculated for the total thickness of fluoropolymer coat between two electrodes).

**Characterization of the textiles**

A drop sensing test was carried out on each textile. The weft fibers from one sensing area and the warp fibers were connected on a 2-channel oscilloscope ("Forward circuit"). A weight of 0,25 kg was dropped of a height of 3 cm on the connected sensing area. The reverse connection is herein called ("Reverse circuit").

The textile made with fibers made according to comparative example 1 showed to have parts of the fluoropolymer coat torn apart after poling the fibers. It was not responsive to the drop sensing test, probably due to short circuits in the structure.

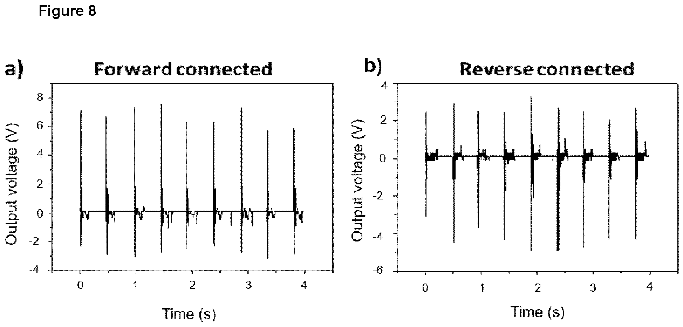

The textile made with fibers according to example 1 was highly responsive to the drop of the weight on it (see Figure 8).

**Advantages of the invention**

The present invention presents one or more of the following advantages:

- the process is simple to carry out with equipment requiring low investment (bath, drying zone, wet-spinning zone, winding);

- the process is easily adaptable to different production scale from laboratory, to pilot and eventually to mass production: it mainly depends on bath size and metal wire length;

- the process enables to obtain fluoropolymer coated wires with high reliability: the uniformly coated fluoropolymer coat enables continuous manufacturing at high production rates;

- textiles made of fluoropolymer wires made by this process have consistent electroactive properties: Uniformly coated layer can show good adhesion between conductive core fiber and organic piezoelectric coated layer. This contributes to high reliability production of textile device by through weaving and poling process without any short-circuit problem.

- Possible of making a diverse structure of 2D or 3D of textile device fabrication: Good adhesion between the layers helps in challenge of diverse weaving technology.

- Possible of making a low acoustic impedance of wearable device.

**Claims**

1. A process (1) for manufacturing a fluoropolymer coated wire comprising:

   - a step of providing a metal wire and at least one solution of a fluoropolymer in a solvent (2), wherein the fluoropolymer has a proportion of less than 10% and 1% or more, preferably a proportion of 9% or less and 3% or more, and most preferably a proportion of 8% or less and 5% or more by weight of the fluoropolymer relative to the total weight of the solution;
   - a step of dip-coating (3) said metal wire in a first solution of the fluoropolymer to deposit a first layer of the solution of fluoropolymer at the surface of the metal wire;
   - a step of drying (4) to evaporate the solvent from the deposited first layer and to form a first layer of fluoropolymer at the surface of the metal wire; and,
   - optionally one or more subsequent steps of respectively dip-coating (5) and of drying (5), to add additional layer(s) of the fluoropolymer, the solvent, and the proportion of fluoropolymer in the solution(s) used for subsequent step(s) of dip-coating being independently chosen.

2. The process as claimed in claim 1, wherein the fluoropolymer is a copolymer comprising at least 80 mol% of units derived from vinylidene fluoride (VDF) and from trifluoroethylene (TrFE), wherein the proportion of units derived from TrFE ranges from 5 mol% to 95 mol%, and preferably from 15 mol% to 55 mol%, relative to the sum of the units derived from VDF and from TrFE.

3. The process as claimed in claim 2, wherein the fluoropolymer is a P(VDF-TrFE-X) terpolymer consisting of:

   - from 50 to 80 mol% of units obtained from VDF;
   - from 15 to 40 mol% of units obtained from TrFE, and
   - from 1 to 15 mol% of units obtained from a third monomer X, the third monomer being preferably chosen in the list consisting of:

      tetrafluoroethylene, hexafluoroethylene, trifluoropropenes, tetrafluoropropenes bromotrifluoroethylene, chlorofluoroethylene, chlorotrifluoroethylene and chlorotrifluoropropene;
      and most preferably the third monomer being chlorotrifluoroethylene or chlorotrifluoropropene.

4. The process as claimed in claim 2, wherein the fluoropolymer is a copolymer essentially consisting of, or consisting of, units derived from VDF and TrFE, wherein the proportion of units derived from TrFE ranges from 15 mol% to 55 mol%, preferably from 16 mol% to 45 mol%, more preferably from 17 mol% to 35 mol% and most preferably from 18 mol% to 28 mol%, relative to the sum of the units derived from VDF and from TrFE.

5. The process as claimed in any one of the preceding claims, in which said solvent is chosen from the following list:

   - ketones, notably methyl isobutyl ketone, methyl ethyl ketone, cyclopentanone and acetone,
   - esters, notably ethyl acetate, methyl acetate, propyl acetate, butyl acetate and propylene glycol methyl ether acetate,
   - amides, such as dimethylformamide and dimethylacetamide,
   - dimethyl sulfoxide,
   - furans, notably tetrahydrofuran,
   - carbonates, notably dimethyl carbonate,
   - phosphates, notably triethyl phosphate,
   - and mixtures thereof.

6. The process as claimed in claim 5, wherein said solvent is chosen from the following list: methyl ethyl ketone, cyclopentanone, dimethylsulfoxyde, and mixtures thereof.

7. The process as claimed in any one of the preceding claims, wherein the solution does not contain any surfactant and/or does not contain any adhesion promoter.

8. The process as claimed in any one of the preceding claims, wherein the solution consists of the fluoropolymer and the solvent.

9. The process as claimed in any one of the preceding claims, comprising 1 to 100 subsequent steps, preferably 3 to 50 subsequent steps, and more preferably 5 to 20 subsequent steps of dip-coating and of drying.

10. The process as claimed in any one of the preceding claims, wherein the average thickness of the fluoropolymer coat at the surface of the metal wire is from 0,1 to 100 micrometers, preferably from 0,5 to 50 micrometers, and more preferably from 1 to 40 micrometers.

11. The wire obtained by the process of any one of claims 1-10.

12. Piezoelectric textile comprising at least one wire obtained by the process of any one of claims 1-10.

**Figure 1**

**Figure 2**

Figure 3

Figure 4

**Figure 5**

**Figure 6**

Figure 7

Figure 8

a) Forward connected

b) Reverse connected

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2020/128230 A1 (ARKEMA FRANCE [FR]) 25 June 2020 (2020-06-25) * claims 1-16; examples 1-2 * | 1-12 | INV. H01B3/44 C08F14/22 C08L27/16 |
| A,D | WEITING LIU ET AL: "Polymeric piezoelectric fiber with metal core produced by electrowetting-aided dry spinning method", JOURNAL OF APPLIED POLYMER SCIENCE, vol. 133, no. 39, 20 June 2016 (2016-06-20), pages 1-8, XP055289419, US ISSN: 0021-8995, DOI: 10.1002/app.43968 Retrieved from the Internet: URL:https://onlinelibrary.wiley.com/doi/abs/10.1002/app.43968> * the whole document * | 1-12 | ADD. H01B3/30 |
| A | WO 2019/030453 A1 (ARKEMA FRANCE [FR]; UNIV BORDEAUX [FR] ET AL.) 14 February 2019 (2019-02-14) * the whole document * | 1-12 | |
| A | WO 2014/161920 A1 (SWEREA IVF AB [SE]) 9 October 2014 (2014-10-09) * the whole document * | 1-12 | TECHNICAL FIELDS SEARCHED (IPC) H01B C08F C09J C08L |

The present search report has been drawn up for all claims

| Place of search | Date of completion of the search | Examiner |
|---|---|---|
| Munich | 14 March 2022 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 8927

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2022

| Patent document cited in search report | | | Publication date | Patent family member(s) | | | Publication date |
|---|---|---|---|---|---|---|---|
| WO | 2020128230 | A1 | 25-06-2020 | CN | 113330591 | A | 31-08-2021 |
| | | | | EP | 3900065 | A1 | 27-10-2021 |
| | | | | FR | 3090665 | A1 | 26-06-2020 |
| | | | | JP | 2022514391 | A | 10-02-2022 |
| | | | | KR | 20210104129 | A | 24-08-2021 |
| | | | | US | 2022077378 | A1 | 10-03-2022 |
| | | | | WO | 2020128230 | A1 | 25-06-2020 |
| WO | 2019030453 | A1 | 14-02-2019 | CN | 111315817 | A | 19-06-2020 |
| | | | | EP | 3665226 | A1 | 17-06-2020 |
| | | | | FR | 3070042 | A1 | 15-02-2019 |
| | | | | JP | 2020529508 | A | 08-10-2020 |
| | | | | KR | 20200038961 | A | 14-04-2020 |
| | | | | TW | 201910416 | A | 16-03-2019 |
| | | | | US | 2021376239 | A1 | 02-12-2021 |
| | | | | WO | 2019030453 | A1 | 14-02-2019 |
| WO | 2014161920 | A1 | 09-10-2014 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020128230 A

### Non-patent literature cited in the description

- **LIU, W. ; CHEN, R. ; RUAN, X. ; FU, X.** Polymeric piezoelectric fiber with metal core produced by electrowetting-aided dry spinning method. *J. Appl. Polym. Sci.,* 2016, vol. 133